# FASCICULE DE BREVET EUROPEEN

(11) **EP 2 094 483 B1**
(45) Date de publication et mention de la délivrance du brevet: **01.10.2014**
(21) Numéro de dépôt: 07866432.3
(22) Date de dépôt: 24.10.2007
(51) Int. Cl.: B21D 51/46

(54) **CAPSULE DE BOUCHAGE A JOINT DE FORME MULTICOUCHE**
STOPFEN MIT MEHRSCHICHTER DICHTUNG
STOPPER CAPSULE WITH MULTILAYER JOINT

(30) Priorité: 24.10.2006 FR 0609289
(43) Date de publication de la demande: 02.09.2009
(73) Titulaire: Amcor Flexibles Capsules France, 92052 Courbevoie (FR)
(72) Inventeur: GRANGER, Jacques, 33350 Saint-Terre (FR); BOURREAU, Jean Marie, 24700 Le Pizou (FR)
(74) Mandataire: Gernet, Samuel Andreas
(86) Numéro de dépôt international: PCT/FR2007/001759
(87) Numéro de publication internationale: WO 2008/056057

(56) Documents cités:
- EP-A- 0 060 073
- EP-A1- 0 770 559
- EP-A1- 0 983 945
- EP-A1- 0 987 187
- WO-A-2006/000706
- WO-A1-01/07334
- WO-A1-99/46176
- WO-A1-02/096645
- WO-A1-2004/101379
- BE-A- 498 551
- FR-A1- 2 296 481
- FR-A1- 2 763 046
- GB-A- 833 090
- US-A- 2 168 409
- US-A- 3 061 130
- US-A- 5 875 909
- US-A- 5 915 577

## Description

### Domaine de l'invention

L'invention concerne le domaine du bouchage de récipients, typiquement des bouteilles, destinés à contenir pendant plusieurs années des liquides, typiquement des boissons, qui sont sensibles à l'oxydation, effervescents ou non, ou encore conditionnés sous pression. Elle concerne le domaine des capsules de bouchage aptes à garantir une étanchéité au gaz suffisante entre l'intérieur et l'extérieur du récipient. Elle concerne plus particulièrement des capsules de bouchage à vis destinées à coopérer avec un goulot fileté du récipient de manière à ce que les capsules puissent être vissées et dévissées.

### Etat de la technique

On connaît déjà un grand nombre de capsules de bouchage pour les liquides dits plats ou les liquides dits tranquilles (teneur en CO₂ inférieure à 1,2 g/l). Ces capsules comprennent souvent un joint rapporté adapté au bouchage de bouteilles dont le contenu liquide, peu sensible à l'oxydation, est maintenu à une pression voisine de la pression atmosphérique.

On connaît par WO 2006/000706 un joint d'étanchéité en un matériau multicouche destiné à être utilisé dans une capsule de bouchage pour bouteilles de boisson alcoolisée. Le joint comprend une couche C apte à subir une compression axiale résiliente, et une couche B formant barrière à l'oxygène accolée à une couche S, support de ladite couche barrière qui est un dépôt très mince de matière anorganique tel que la silice ou l'alumine.

On connaît par US 5 915 577 un procédé de fabrication d'une capsule de bouchage dans lequel on approvisionne une coque qui comprend une tête et une jupe, on forme, par découpe dans une bande ou feuille directement au-dessus de la coque renversée, une pastille en matériau multicouche, on assemble ladite pastille à ladite coque en introduisant ladite pastille dans ladite coque par son ouverture.

FR 2 296 481 décrit un procédé de fabrication d'une capsule de bouchage.

On connaît aussi des moyens de bouchage de liquide sous pression, tels que les vins de Champagne, comprenant un bouchon de liège à tête qui est fixé au goulot à l'aide d'un muselet métallique. Dans ce cas, il n'est pas possible ou facile de reboucher le goulot avec le bouchon.

On connaît aussi des capsules de bouchage aptes à tenir à la pression grâce à un joint coulé formé en un mélange ou "compound" à base de PVC.

Les problèmes posés dans le domaine des capsules étanches sont de plusieurs ordres.

Les joints traditionnels ne permettent pas d'obtenir une étanchéité liquide et gazeuse en particulier avec des pressions à l'intérieur du récipient allant de 10 bar à 15 bar, soit de 1 MPa à 1,5 MPa, pour une plage de températures allant typiquement de 0°C à 50°C, et cela pendant une durée pouvant atteindre plusieurs années, voire plusieurs dizaines d'années.

Pour ce qui concerne les joints coulés, le compound à base de PVC habituellement utilisé comprenait au moins un plastifiant tel que le DOP (dioctylphtalate), dont l'usage est maintenant interdit réglementairement dans la Communauté Européenne. Les plastifiants de substitution tels que le DEHP (di-éthylhexylphtalate) posent d'autres problèmes car ils nécessitent des équipements spéciaux pour être mis en oeuvre, de sorte que leur utilisation entraîne des investissements coûteux. Les DEHP sont d'autre part sur le point d'être également interdits réglementairement.

D'autre part, l'amélioration de l'étanchéité ne doit pas se traduire par une dégradation de la facilité d'ouverture de la capsule. En particulier lorsqu'il s'agit d'une capsule à vis, le dévissage manuel doit être effectué avec un couple dans une plage standard allant typiquement de 0,1 N.m (mini pour une capsule de diamètre 16 mm) à 3 N.m (maxi pour une capsule de diamètre 41 mm), ce qui correspond à un effort manuel standard. En effet, il ne servirait à rien d'avoir un récipient à bouchage étanche avec une bonne tenue à la pression s'il était ensuite très difficile de l'ouvrir ou si cela nécessitait des équipements spéciaux tels que des pinces.

Selon l'invention, la capsule de bouchage, présentant une direction axiale, comprenant une coque avec une tête sensiblement perpendiculaire à ladite direction axiale et une jupe, et un joint disposé à l'intérieur de ladite coque, ladite capsule de bouchage étant destinée à obturer de manière étanche le goulot d'un récipient par compression axiale et latérale de ladite capsule et dudit joint contre ledit goulot, caractérisée en ce que :
a) ledit joint est un joint rapporté dont la forme présente une partie centrale, typiquement plane et perpendiculaire à ladite direction axiale, entourée par un bord périphérique axial dont la hauteur axiale h, mesurée entre le niveau de la surface interne de ladite partie centrale et l'extrémité dudit bord périphérique est au moins égale au ¼ de l'épaisseur de la dite partie centrale ;
b) ledit joint est obtenu à partir d'un disque ou d'une pastille découpée dans une bande multicouche avec un diamètre supérieur au diamètre interne de la coque au niveau de la tête puis enfoncé à force dans la capsule en ce qu' avant capsulage le rayon de courbure R du congé raccordant la partie centrale du joint et le bord périphérique axial est compris entre 0,5 mm et 2 mm et est supérieur au rayon de courbure R' de ladite coque dans la zone de raccordement de ladite tête et de ladite jupe;
c) ledit joint de forme est un joint multicouche constitué de :
   c1) une couche résiliente en un matériau apte à subir une grande déformation en compression tout en restant dans son domaine élastique, ce matériau est choisi du groupe consistant du polystyrène expansé (EPS), polypropylène expansé (EPP) et polyéthylène expansé (EPE);
   c2) un ensemble de couches adjacentes, comprenant au moins les couches suivantes, une même couche pouvant remplir plus d'une des fonctions décrites ci-dessous:
      c2.1) une couche en un matériau ayant pour fonction de former barrière à la diffusion des gaz est un métal ou un alliage métallique tel que l'aluminium ou un alliage d'aluminium, l'acier, l'étain ou un alliage d'étain, un matériau organique tel que le polychlorure de vinylidène (PVDC), un copolymère éthylène - alcool vinylique (EVOH) ou encore un matériau minéral tel qu'un oxyde de silicium (SiOx);
      c2.2) une couche support malléable ayant pour fonction de conférer audit ensemble de couches adjacentes un comportement mécanique global malléable permettant, en association avec ladite couche résiliente, audit joint de forme de subir la déformation imposée par sa mise en forme sans qu'il y ait formation de plis, ladite couche support malléable est en un matériau tel qu'un métal ou alliage métallique, typiquement de l'aluminium ou un alliage d'aluminium, de l'acier, de l'étain ou un alliage d'étain, ou un matériau thermoplastique tel qu'une polyoléfine (PE ou PP), un polyéthylène téréphtalate (PET), ou un polyamide (PA);
      c2.3) une couche extérieure en matière plastique ayant pour fonction de présenter une surface extérieure destinée à être indentée sous l'effet de ladite compression axiale de ladite capsule et dudit joint contre ledit goulot, de sorte qu'elle épouse, au niveau du contact, la forme de la surface du buvant dudit goulot, ladite couche extérieure est une polyoléfine, de préférence un polyéthylène (PE), éventuellement chargé en agent glissant, un polychlorure de vinylidène (PVDC), un polyéthylène téréphtalate (PET) ou de préférence, un polyamide (PA).

Ladite couche extérieure est destinée à être mise au contact du buvant du goulot du récipient. Elle est constituée en un matériau plastique déformable de sorte que sa surface est, au cours du capsulage indentée par le buvant du goulot qui est constitué d'un matériau nettement plus rigide, tel que le verre, et qu'elle continue, après capsulage, à épouser, sous l'effet de la compression axiale résultant du capsulage et du sertissage, le relief de la surface dudit buvant. De façon à ce que la capsule puisse être enlevée facilement, le matériau de ladite couche extérieure forme avantageusement avec le matériau du récipient un contact avec un coefficient de frottement faible, typiquement un coefficient de Coulomb inférieur à 0,25, de préférence inférieur à 0,2. Typiquement, ce matériau est constitué en un polyamide ou un polyéthylène avantageusement chargé avec un agent glissant.

Cette combinaison de moyens résout les problèmes posés. En effet, la demanderesse a pu observer que ces moyens permettaient d'obtenir une excellente étanchéité aux liquides et aux gaz. Ils se révèlent particulièrement avantageux pour les moyens de bouchage de liquides sous pression car ils permettent d'obtenir une excellente tenue à la pression.

Selon une hypothèse émise par la demanderesse, le joint de forme selon l'invention serait, très probablement en raison de la présence de la couche support malléable au.sein de l'ensemble de couches adjacentes, dépourvu du moindre pli, ce qui est difficile à obtenir avec un joint de forme traditionnel.

Ceci pourrait expliquer la possibilité d'obtenir une excellente étanchéité et une excellente tenue à la pression.

Selon l'invention, le joint est un joint rapporté multicouche qui, lorsqu'il se trouve à l'intérieur de la coque de la capsule, ne présente pas une simple forme de disque mais celle d'une coupe avec un bord axial, sensiblement cylindrique, dont la hauteur est sensiblement du même ordre de grandeur que l'épaisseur de la partie substantiellement plate du joint. Ce joint de forme peut être par exemple un disque embouti ou thermoformé puis introduit au fond de la coque de la capsule. Selon l'invention le joint de forme est obtenu à partir d'un disque ou d'une pastille découpée dans une bande multicouche avec un diamètre supérieur - d'environ deux fois son épaisseur - au diamètre interne de la coque au niveau de la tête puis enfoncé à force dans la capsule par exemple à l'aide d'un mandrin. Grâce à la couche support, qui donne son comportement mécanique global audit ensemble de couches adjacentes, le joint est mis en forme sans qu'il y ait formation de plis qui sont à l'origine de fuites.

Selon l'invention le joint présente après enfoncement une géométrie telle que sa périphérie n'est pas plaquée contre la surface interne de la périphérie de la tête de la coque. En d'autres termes, le rayon de courbure R du congé raccordant la partie centrale du joint et le bord périphérique axial, typiquement compris entre 0,5 mm et 2 mm, est supérieur au rayon de courbure R' de ladite coque à la zone de raccordement de ladite tête et de ladite jupe. Ce n'est que lors du capsulage, lorsque la tête est comprimée au moins axialement que la partie périphérique du joint vient se plaquer sur la surface interne de la périphérie de la tête de la coque.

Lors du capsulage, c'est-à-dire lorsqu'après remplissage du récipient la capsule est sertie autour du goulot, le bord axial du joint peut non seulement être plaqué contre la surface interne de la périphérie de la tête de la coque mais il peut également être déformé par allongement axial et rétrécissement radial, si la capsule subit au niveau de la périphérie de la tête de la coque une déformation qu'elle transmet au joint. Cette déformation peut comprendre par exemple une compression latérale, dans le sens radial centripète, due au passage planétaire de galets ou encore la combinaison d'un rétreint et d'une traction axiale qui résulterait de l'enfoncement axial d'une tête de compression annulaire.

La demanderesse a constaté que la déformation subie au cours du capsulage, en particulier la combinaison du rétreint, de l'allongement et du plaquage contre la tête de la coque, améliorait fortement les conditions de contact intime entre le joint et le buvant du récipient, donc l'étanchéité aux liquides et aux gaz sur une longue période, à condition que le joint ait été déformé proprement - c'est-à-dire sans pli - lorsqu'il a été mis en place dans la capsule,

Avantageusement, la jupe comprend, dans sa partie la plus proche de la tête, une projection radiale intérieure, typiquement une nervure interne annulaire, formant une butée pour ledit bord axial dudit joint. De préférence, ladite projection radiale intérieure est disposée à une distance axiale de ladite tête qui a été choisie en fonction notamment de ladite hauteur axiale h, de manière à ce que ledit bord du joint soit bloqué axialement par ladite projection radiale intérieure. De préférence, cette distance est définie de sorte que ledit joint reste sous contrainte après mise en place à l'intérieur de ladite coque.

La coque peut être métalloplastique ou métallique, typiquement en étain, ou en alliage d'étain, en acier ou en aluminium, ou en alliage d'aluminium.

Avantageusement, ledit joint présente une épaisseur E allant de 1 mm à 3 mm, et de préférence de 1,2 mm à 2,5 mm.

L'ensemble de couches adjacentes peut être constitué par un film multicouche que l'on assemble à la couche résiliente par collage, contre-collage, soudage ou tout autre moyen conventionnel. Comme il a été indiqué précédemment, chacune des couches de l'ensemble de couches adjacentes peut remplir plusieurs des fonctions décrites en c2.1, c2.2 et c2.3. De plus, l'ordre c2.1, c2.2 et c2.3 dans lequel ces couches sont décrites n'est pas une indication sur le positionnement des couches les unes par rapport aux autres. L'ensemble de couches adjacentes peut également être constitué par une couche (ou un ensemble de couches) revêtue sur une de ses faces par un revêtement de faible épaisseur, tel qu'un revêtement déposé par PVD, CVD ou assistance plasma.

Avantageusement, le joint présente une structure symétrique: deux ensembles de couches adjacentes identiques sont disposés de façon symétrique de part et d'autre de la couche résiliente. L'intérêt d'une structure symétrique réside dans une plus grande machinabilité des joints, ceux-ci pouvant être manipulés dans n'importe quelle position avant d'être placés à l'intérieur de la coque.

Avantageusement, ladite couche résiliente est une couche en polyéthylène expansé (EPE), de densité comprise entre 0,2 à 0,5 et de préférence entre 0,25 et 0,48.

La couche support malléable a une épaisseur choisie en fonction de l'épaisseur et des caractéristiques mécaniques des autres couches de façon à conférer à l'ensemble de couches adjacentes un comportement mécanique global malléable satisfaisant, garantissant en particulier l'absence de formation de plis lors de l'introduction du joint dans la coque.

Ladite couche support peut être métallique ou organique. La demanderesse a en effet constaté qu'il était préférable qu'elle ne comporte pas de couche en matériau cellulosique ou en papier de type "Kraft". Dans de tels cas, la périphérie du joint forme presque systématiquement des plis qui se révèlent rédhibitoires pour l'obtention d'une bonne étanchéité entre la capsule et le buvant de la bouteille. Si l'ensemble de couches adjacentes comprend comme couche support une couche métallique, cette couche peut servir également de couche barrière. Si l'ensemble de couches adjacentes ne comprend pas de couche métallique, la couche support est choisie avec une épaisseur substantiellement supérieure à celle de la couche barrière organique voisine. De la sorte, ladite couche barrière, en général rigide et fragile, peut être plus facilement déformée sans perdre ses propriétés.

Ladite couche extérieure est une couche organique flexible qui favorise un contact intime et imperméable avec le matériau du récipient. Avantageusement, elle présente avec le matériau de la bouteille, typiquement du verre, un coefficient de frottement faible, typiquement inférieur à 0,25, de préférence inférieur à 0,2. Parmi les matériaux possibles, on choisira plutôt une polyoléfine, par exemple un polyéthylène (PE), éventuellement chargé en agent glissant, un polychlorure de vinylidène (PVDC), un polyéthylène téréphtalate (PET) ou encore, de préférence, un polyamide (PA). La demanderesse a en effet constaté qu'une bonne étanchéité au niveau d'un goulot capsulé dépendait autant, sinon plus, de l'aptitude du joint à épouser intimement la forme du buvant que des propriétés intrinsèques de perméabilité des couches constitutives du joint: il ne sert à rien qu'une couche comme une couche métallique offre une barrière excellente à la diffusion si cette dernière n'est pas suffisamment malléable pour épouser d'aussi près que possible le relief imposé par les micro-aspérités du matériau du buvant de façon à avoir un contact intime avec celui-ci. Dans ce domaine, les matières plastiques, et tout particulièrement les polyamides, s'avèrent présenter un comportement excellent.

Dans certaines modalités de l'invention, ladite couche en matériau barrière comprend une couche métallique, typiquement en aluminium ou en étain ou leurs alliages respectifs.

D'autres modalités de l'invention présentent des joints plus faciles à recycler entièrement ou presque entièrement en matières plastiques. Dans ce cas, ladite couche barrière peut être un minéral tel qu'un oxyde de silicium SiOx déposé sur l'une des couches en matière plastique constitutives du joint. La couche barrière peut également être en un matériau barrière organique tel qu'un copolymère éthylène-alcool vinylique (EVOH), un polychlorure de vinylidène (PVDC), en particulier un Saran, ou encore un polyamide (PA).

Les joints peuvent présenter plusieurs structures possibles. Les structures préférées comprennent une âme constituée de ladite couche résiliente, d'épaisseur typiquement comprise entre 1 et 3 mm, en général 2 mm, et, adjacent à au moins une face de ladite âme, un ensemble de couches adjacentes qui est:
a) soit un ensemble complexe métalloplastique, du type P/Adh/M/Adh/P' ou encore du type M/Adh/P/Adh/M'/Adh/P', où P et P' symbolisent des matériaux plastiques, éventuellement différents, M et M' symbolisent des métaux, éventuellement différents, et Adh désigne une couche adhésive appropriée à l'assemblage de couches métalliques et de couches polymériques, typiquement en polyuréthanne (PUR) ou en EAA (copolymère éthylène - acide acrylique), par exemple PE/EAA/Sn/EAA/PVDC ou PE/EAA/Al/EAA/PA pour le premier cas et Al/EAA/PE/EAA/Al/EAA/PA pour le deuxième;
b) soit un ensemble entièrement plastique, par exemple un film multicouche coextrudé ou collé de type PE/EVOH/PE ou, de préférence, une couche de polyamide (PA) recouverte d'une fine couche d'oxyde de silicium SiOx (x voisin de 2, typiquement compris entre 1,5 et 1,8), d'une épaisseur typiquement comprise entre 50 et 80 nm. Dans ce dernier cas, et en particulier si la bouteille est en verre, la fine couche de silice est placée avantageusement vers la couche résiliente, typiquement en EPE, de façon à laisser la couche polyamide en contact avec le buvant du goulot.

Dans une autre modalité, ladite capsule comprend une coque extérieure métallique et un insert intérieur en matière plastique, ledit insert étant solidaire de ladite coque métallique, son fond étant plaqué contre la tête de la coque, de sorte que ledit joint de forme est solidarisé sous contrainte non plus à ladite tête mais audit fond dudit insert.

Quelles que soient les modalités envisagées, ladite coque peut comprendre un moyen de détection d'une première ouverture comprenant typiquement une bande de garantie rattachée par une pluralité de ponts à une partie haute de ladite coque, ladite bande de garantie restant solidarisée audit goulot lors d'une première ouverture entraînant une rupture desdits ponts. La jupe de la coque peut également comprendre au moins un jonc formant une projection radiale annulaire, ledit jonc étant placé au-dessous de ladite bande de garantie ou d'une ligne d'affaiblissement, de manière à protéger ladite bande de garantie ou ladite ligne d'affaiblissement lorsque la jupe est sertie au goulot par formation d'une partie rétreinte inférieure. Ladite jupe peut également comprendre extérieurement une pluralité de cannelures axiales de manière à faciliter la prise manuelle de la capsule en vue notamment d'une première ouverture.

Un autre objet selon l'invention est un procédé de fabrication d'une capsule de bouchage présentant une direction axiale, comprenant une coque, avec une tête sensiblement perpendiculaire à ladite direction axiale et un jupe, et un joint disposé à l'intérieur de ladite coque, ladite capsule de bouchage étant destinée à obturer de manière étanche un goulot d'un récipient par compression axiale et latérale de ladite capsule et dudit joint contre ledit goulot, ledit joint est un joint rapporté dont le forme présente une partie centrale, typiquement plane et perpendiculaire à ladite direction axiale, entourée par un bord périphérique axial dont la hauteur axiale h, mesurée entre le niveau de la surface interne de ladite partie centrale et l'extrémité dudit bord périphérique est au moins égale au ¼ de l'épaisseur de la dite partie centrale, caractérisé en ce que :
a) on approvisionne ou on forme une coque qui comprend une tête et une jupe et présente un diamètre intérieur D en haut de coque au niveau de ladite tête,
b) on approvisionne ou on forme une pastille en matériau multicouche de diamètre D'>D, le multicouche comprenant au moins :
   b1) une couche résiliente en un matériau apte à subir une grande déformation en compression tout en restant dans son domaine élastique, ce matériau est choisi du group consistant du polystyrène expansé (EPS), polypropylène expansé (EPP) et polyéthylène expansé (EPE), ou un matériau élastomérique;
   b2) un ensemble de couches adjacentes, comprenant au moins les couches suivantes, une même couche pouvant remplir plus d'une des fonctions décrites ci-dessous:
      b2.1) une couche en un matériau ayant pour fonction de former barrière à la diffusion des gaz;
      b2.2) une couche support malléable ayant pour fonction de conférer audit ensemble de couches adjacentes un comportement mécanique global malléable permettant, en association avec ladite couche résiliente, à ladite pastille de subir la déformation imposée par sa mise en forme sans qu'il y ait création de plis;
      b2.3) une couche extérieure en matière plastique ayant pour fonction de présenter une surface extérieure destinée à être indentée sous l'effet de ladite compression axiale dudit joint contre ledit goulot exercée lors du capsulage, de sorte qu'elle épouse, au niveau du contact, la forme de la surface du buvant dudit goulot;
c) ladite pastille étant formée par découpage, typiquement à l'emporte-pièce, d'une bande multicouche, l'écart entre le diamètre D' de la pastille et le diamètre intérieur D de la coque étant typiquement compris entre la moitié et le double de l'épaisseur de ladite pastille ;
d) on assemble ladite pastille à ladite coque en introduisant à force ladite pastille dans ladite coque par son ouverture, à l'aide d'un dispositif d'assemblage comprenant une matrice de contrainte placée sur ladite ouverture de ladite coque contre son extrémité inférieure, et un poinçon de mise en forme de ladite pastille, qui par déplacement axial relatif du poinçon par rapport à la matrice, déforme ladite pastille par passage dans la matrice pour former ledit joint de forme doté dudit bord axial et place ledit joint au fond de ladite coque.

Selon l'invention le joint est formé par passage du bord périphérique de la pastille entre ledit poinçon et ladite matrice puis est mis en place au fond de la coque sous contrainte, par déplacement axial du poinçon dans la coque et le bord du joint est maintenu en tension par un contact glissant entre la surface extérieure du bord axial et la paroi intérieure de la coque. Avantageusement, la pastille est transformée en joint qui est placé sous contrainte au fond de la coque en un seul mouvement axial du poinçon, la matrice et la coque étant maintenues fixes.

Pour bloquer axialement le joint dans la tête de la coque, la jupe peut comprendre, dans sa partie la plus proche de la tête, dite "haute", une projection radiale intérieure, typiquement une rainure annulaire, qui forme une butée pour le bord axial dudit joint. Ledit joint est placé en force au-delà de ladite projection radiale intérieure, entre la tête et la projection radiale intérieure, l'extrémité du bord axial venant en butée contre ladite projection radiale intérieure, la distance entre la paroi interne de la tête et ladite projection radiale intérieure étant définie de préférence de telle sorte que ledit joint peut être maintenu sous contrainte.

Si la capsule comprend un insert, ce procédé comprend en outre une étape dans laquelle on approvisionne un insert formant une pièce moulée en matière plastique comprenant une tête et une jupe, on assemble ladite pastille audit insert au lieu de l'assembler à ladite coque, de manière à obtenir ledit joint typiquement sous contrainte assemblé audit insert. On peut soit assembler ledit insert à ladite coque avant que ledit joint soit formé dans ledit insert, soit assembler d'abord ledit joint audit insert, ledit insert ainsi doté dudit joint typiquement sous contrainte étant ensuite fixé à ladite coque.

Avantageusement, on met en oeuvre un procédé de capsulage du goulot d'une bouteille, ledit goulot comprenant au moins un buvant, une partie axiale supérieure jouxtant ledit buvant du goulot et de diamètre extérieur D1 et une contre-bague de diamètre extérieur D3 formant un épaulement de sertissage avec une partie inférieure de diamètre D3' < D3, procédé dans lequel :
a) on utilise un dispositif de capsulage comprenant notamment un embout de compression axiale comprenant deux parties coaxiales, l'une centrale, appelée "tête de compression axiale", l'autre périphérique, appelé "embout annulaire" ou "bague de rétreint", ces deux parties pouvant être solidaires ou mobiles l'une par rapport à l'autre et un moyen de sertissage, typiquement une molette;
b) on approvisionne une capsule de bouchage selon l'invention,
c) on place ladite capsule sur ledit goulot, ladite capsule, typiquement cylindrique, présentant un diamètre intérieur adapté aux dimensions dudit goulot, de manière à ce que ladite tête de ladite capsule puisse venir en butée axiale contre ledit buvant, ledit joint de forme étant interposé entre ladite tête et ledit buvant,
d) on déplace ledit mandrin de compression axiale avec sa partie centrale et sa partie périphérique solidaires en direction de la capsule, de manière à comprimer la tête de la coque et le joint de forme en plaquant ce dernier contre ledit buvant;
e) on effectue un déplacement axial supplémentaire de la seule partie périphérique de l'embout de compression de sorte que la partie de ladite capsule en regard de ladite partie axiale supérieure du goulot subit un rétreint en passant d'un diamètre extérieur Do à un diamètre extérieur D'o < Do, ledit rétreint entraînant la compression radiale dudit bord axial du joint contre au moins une fraction de la partie axiale supérieure du goulot;
f) on applique radialement contre ladite jupe ledit moyen de sertissage, de manière à repousser le métal de ladite jupe sous ledit épaulement.

Ce procédé s'applique principalement aux capsules à vis. Dans ce cas, le goulot du récipient comprend également, entre la partie axiale supérieure et la contre-bague, une partie filetée comprenant au moins une gorge de filetage, de diamètre extérieur D₂ > D₁ et de diamètre D'₂<D₂ à fond de gorge, et le dispositif de capsulage comporte également une molette de filetage, de sorte qu'entre l'étape e) et l'étape f), on applique radialement contre la jupe de la capsule ladite molette de filetage de manière à repousser le métal de ladite jupe dans ladite gorge de la partie filetée du goulot, de manière à former ainsi une jupe métallique dotée d'un filetage.

Avantageusement, le taux de rétreint D'o/Do est compris entre 0,91 et 0,96, de préférence entre 0,92 et 0,95, et vaut typiquement 0,94.

Un autre objet de l'invention est l'utilisation de capsules de bouchage selon l'invention ou obtenues par le procédé selon l'invention, pour l'obturation de bouteilles devant contenir un liquide sous pression.
Toutes les figures sont relatives à l'invention.
La figure 1 représente une capsule de bouchage (1') à jupe dite longue, sa partie gauche étant une vue en coupe axiale dans un plan vertical selon sa direction axiale (10'), sa partie droite étant une vue de côté.
La figure 2 représente une capsule de bouchage (1) à jupe dite courte, sa partie gauche étant une vue en coupe axiale dans un plan vertical selon sa direction axiale (10), sa partie droite étant une vue de côté.
La figure 3 est une représentation schématique, en coupe axiale, de l'assemblage d'une pastille de joint (3') à une coque (2).
Les figures 4a, 4b et 4c sont des demi-coupes axiales gauches qui représentent les premières étapes de l'opération de capsulage par laquelle la capsule (1) est fixée au goulot (40) d'une bouteille (4). La figure 4d représente une demi-coupe axiale gauche de la même tête munie de sa capsule après formation du filet et sertissage de l'extrémité inférieure (219).
Les figures 5 à 8 sont des représentations schématiques, en coupe axiale, de différentes structures de joint multicouche selon l'invention, les différentes couches étant éventuellement liées entre elles par une couche d'adhésif "Adh".
La figure 9 représente en coupe axiale une autre modalité de capsule (1").
La figure 10 représente schématiquement un dispositif permettant de contrôler l'étanchéité de récipients: les récipients capsulés avec des capsules selon l'invention donnent des résultats d'étanchéité nettement supérieurs à ceux obtenus avec les capsules de l'art antérieur.

### EXEMPLES DE REALISATION

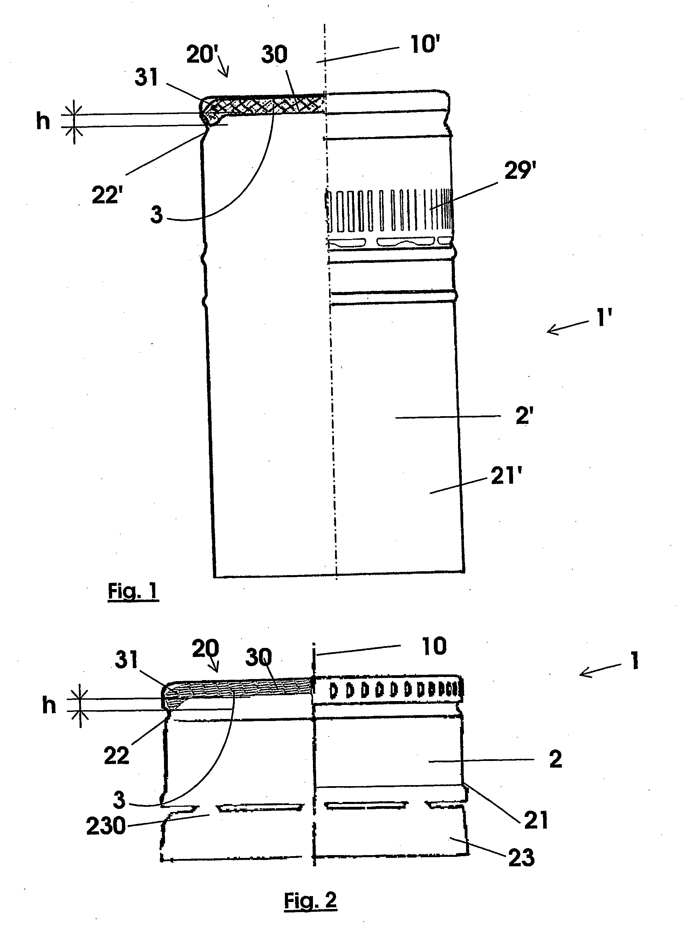

### Capsules comprenant un joint rapporté de forme multicouche selon l'invention (Figures 1, 2 et 9)

La figure 1 représente une capsule de bouchage **1'** à jupe longue présentant une direction axiale **10'.** Cette capsule comprend une coque **2',** composée d'une tête **20'** et d'une jupe **21',** et un joint **3** disposé à l'intérieur de la coque. La jupe **21'** comprend extérieurement une pluralité de cannelures axiales **29'** pour faciliter la prise manuelle de la capsule en vue notamment d'une première ouverture.

Le joint **3** est un joint de forme enfoncé à force à l'intérieure de la coque **2'.** Il présente une partie centrale **30** typiquement plane et perpendiculaire à la direction axiale **10** et un bord périphérique axial **31** raccordé à ladite partie centrale **30.** Sa hauteur axiale **h,** mesurée à partir du niveau de la surface de la partie centrale du joint, est sensiblement égale à l'épaisseur de la partie centrale **30,** comprise entre 0,5 et 2 mm.

Ledit joint **3** est un joint de forme multicouche réalisé à partir d'une pastille **3'** obtenue par découpe d'une bande multicouche dont quelques structures sont données en exemple ci-après. Il est bloqué axialement par une projection radiale intérieure: la rainure annulaire **22.**

La figure 2 représente une capsule de bouchage **1** à jupe courte, présentant une direction axiale **10.** Cette capsule comprend une coque **2,** comprenant une tête **20** et une jupe **21,** et un joint **3,** identique au joint précédent et disposé de la même façon à l'intérieur de la coque. Il est également bloqué axialement par une projection radiale intérieure ou nervure annulaire interne **22.** Le bas de la jupe est muni d'une bande garantie **23** séparée du reste de la jupe par une ligne de ponts sécables **230.**

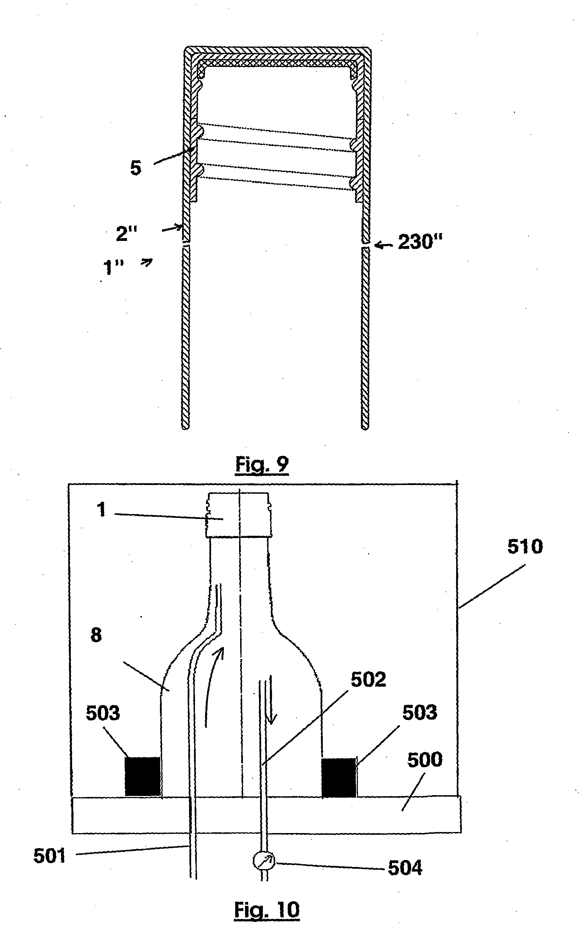

La figure 9 représente en coupe axiale une autre modalité de capsule de bouchage **(1").** Dans cette modalité, un insert fileté **5** est assemblé à la coque métallique **2",** le joint de forme **3** étant assemblé à l'insert fileté **5.** Le bas de la jupe est également séparé du reste de la jupe par une ligne de ponts sécables **230".**

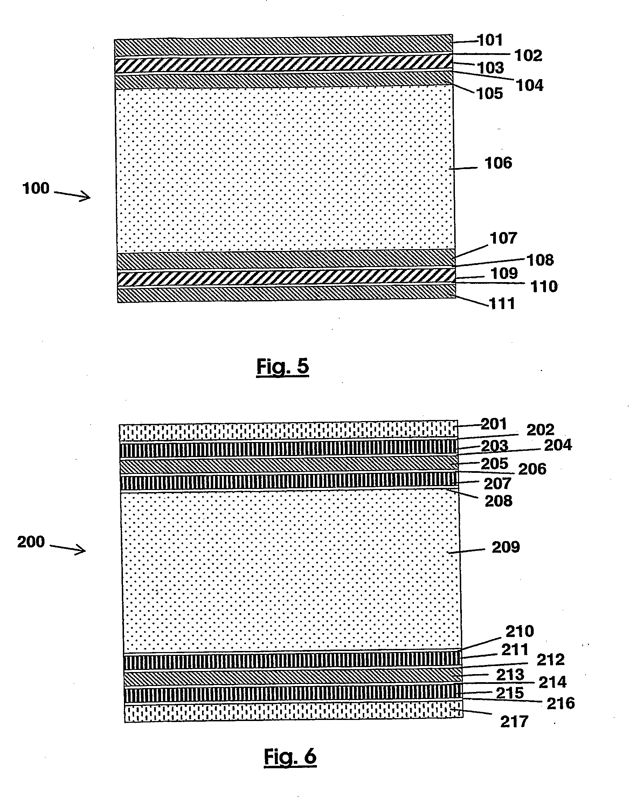

### Structures de joints multicouches ( Figures 5 à 8)

Les exemples suivants décrivent différentes structure de bandes réalisées pour obtenir les pastilles permettant de réaliser les joints selon l'invention.

La figure 5 illustre une structure multicouche symétrique **100** où l'âme **106** en polyéthylène expansé est entourée sur ses deux faces d'un film multicouche PE (**101**, **111**)/Adh (**102**, **110**)/PVDC (**103**, **109**)/Adh (**104**, **108**)/PE (**105**, **107**). Le symbole Adh désigne une couche adhésive, typiquement en polyuréthane ou en EVA (copolymère éthylène - acétate de vinyle). Chaque portion de film (**101** à **105, 107** à **111**) est accolée par thermosoudage à une face de l'âme **106** en EPE. Optionnellement, la couche externe (**101**, **111**) en PE est chargée avec un agent glissant compatible avec le contact alimentaire, tel qu'une oléamide ou une erucamide.

La figure 6 illustre également une structure multicouche symétrique où l'âme **209** en EPE est entourée de deux portions d'un même film disposées symétriquement, ledit film étant un complexe PA (**201**, **217**)/Adh (**202**, **216**)/Al (**203**, **215**)/Adh (**204**, **214**)/PE (**205**, **213**) /Adh (**206**, **212**) /Al (**207**, **211**), où Al désigne une couche en alliage d'aluminium, PE une couche en polyéthylène, typiquement du PE.BD et Adh une couche adhésive, typiquement en EAA (copolymère éthylène - acide acrylique). Chaque portion de film (**201** à **207, 211** à **217**) est accolée par contre-collage à une face de l'âme **209** en EPE en interposant une couche adhésive **(208, 210),** typiquement également en EAA.

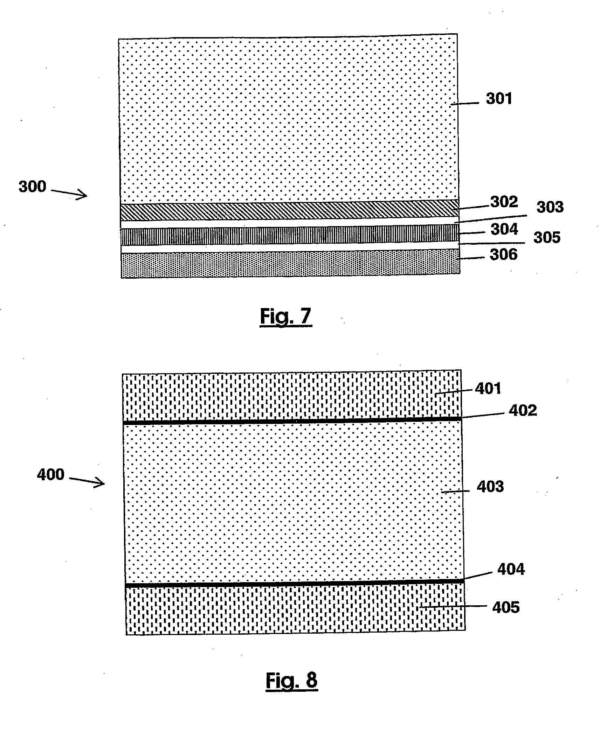

La figure 7 illustre une structure multicouche asymétrique où l'âme **301** en EPE est associée sur une de ses faces à un film dont la structure est la suivante: PE (**302**)/ Adh (**303**) / Sn (**304**) / Adh (**305**) / PVDC (**306**) où "Adh" représente une couche adhésive, typiquement en polyuréthane, PVDC désigne une couche en polychlorure de vinylidène, de préférence un Saran, Sn désigne une couche métallique en alliage d'étain, et PE désigne une couche en polyéthylène PE . Le film est accolé sur l'âme par soudage en présentant la couche **302** en PE du côté de l'âme **301.**

La figure 8 illustre encore une structure multicouche symétrique où l'âme **403** en EPE est entourée de deux portions d'une bande de polyamide PA (**401**, **405**) revêtue sur une de ses faces d'une mince couche de silice (**402**, **404**). Ces portions sont disposées symétriquement, le revêtement en silice étant orienté vers l'âme **403** en EPE. La silice a été déposée par assistance plasma sur la bande en polyamide.

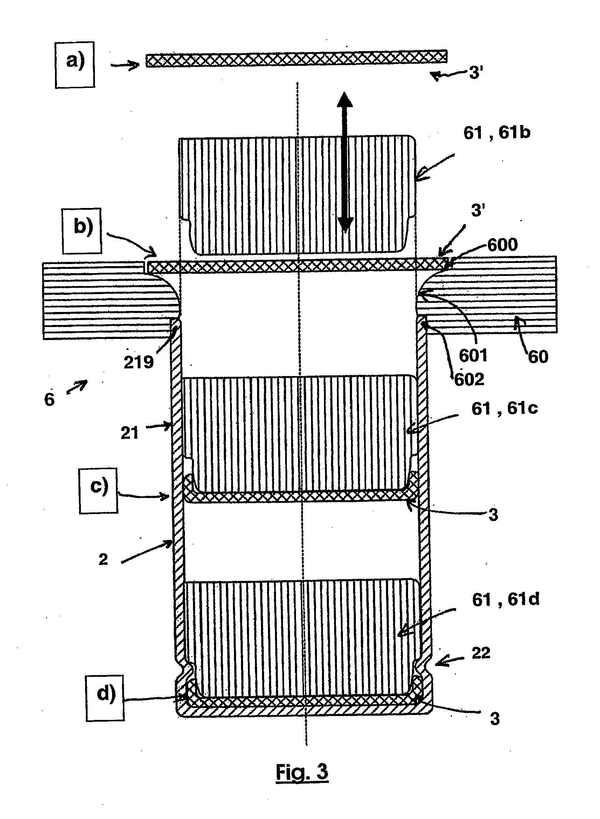

### Procédé de mise en forme du joint rapporté multicouche (figure 3)

La figure 3 est une représentation schématique, en coupe axiale, de l'assemblage d'une pastille de joint **3'** à une coque **2.**

On a représenté quatre étapes a), b) c) et d) de l'évolution de la pastille **3'** de joint dans le dispositif d'assemblage **6** coopérant avec une coque (2) :
- à l'étape a), la pastille de joint **3' est** représentée isolément;
- à l'étape b), la pastille de joint **3'** est représentée posée sur la matrice **60,** dans sa partie supérieure évidée **600,** le poinçon **61** (à l'état 61b) étant placé au-dessus de la pastille de joint **3',** tandis que la partie inférieure évidée **602** de la matrice **60** coopère avec l'extrémité inférieure **219** de la jupe **21** de la coque **2;**
- à l'étape c), le poinçon **61** (à l'état 61 c) est descendu à mi-hauteur dans la jupe **21** de la coque **2** et repousse vers le fond le joint de forme **3** mis en forme sous contrainte en subissant un pliage le long d'une ligne circulaire par passage dans la matrice **60;**
- à l'étape d), le poinçon **61** (à l'état 61 d) est descendu au fond de la jupe **21** de la coque **2** et le joint de forme **3** est repoussé au fond de la coque au-dessous de la projection radiale **22.**

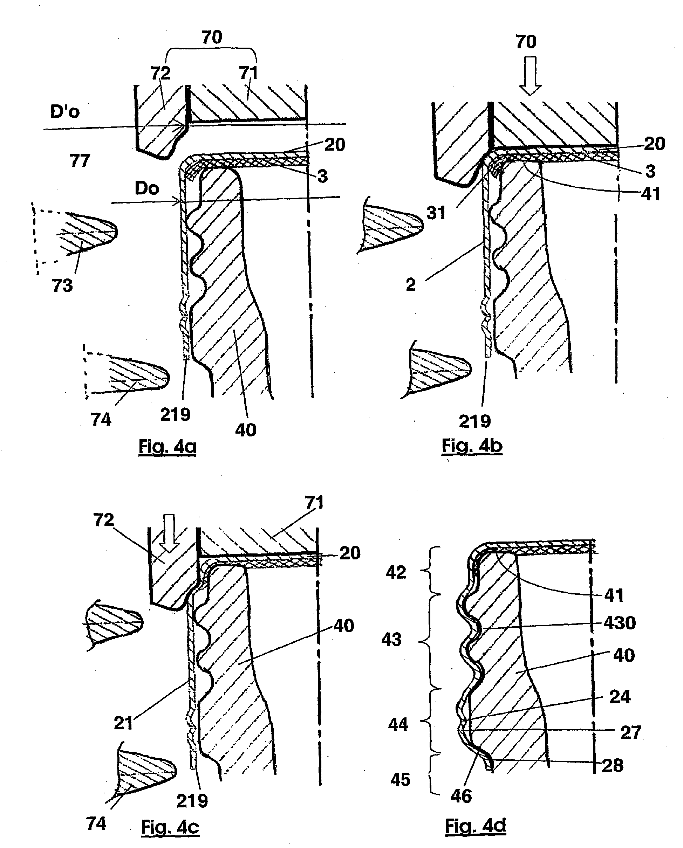

### Procédé de capsulage avec une capsule selon l'invention (figures 4a, 4b, 4c, 4d)

La capsule choisie pour illustrer les différentes étapes du capsulage, dans les figures 4a à 4d est une capsule à vis à jupe courte identique à celle illustrée en figure 2, la projection radiale intérieure 22, destinée à piéger axialement le joint, n'étant toutefois pas représentée pour ne pas surcharger les dessins. Le filet de vissage de cette capsule n'est formé qu'au cours du capsulage. Les différentes pièces (**70 = 71 + 72, 73, 74**) du dispositif de capsulage (**7**) n'ont été représentées que partiellement.

Sur la figure 4a, on a représenté la capsule **1** placée sur le goulot **40** en regard du dispositif de capsulage **7,** la capsule **1** ayant un diamètre intérieur sensiblement égal, légèrement supérieur au plus grand diamètre extérieur dudit goulot **40.** Le goulot **40** est fileté. Sur la figure 4d), on peut voir qu'il est composé d'une partie axiale supérieure **42** surmontée d'une partie sommitale appelée "buvant" **41,** d'une partie filetée **43,** présentant une gorge **430,** d'une contre-bague **44** en saillie par rapport à la partie inférieure rétreinte **45,** l'épaulement **46** entre la contre-bague **44** et la partie inférieure rétreinte **45** servant de support de fixation de la capsule **1** lors du sertissage. Le dispositif de capsulage **7** comprend notamment une molette **73** et un embout de compression axiale **70** composé au moins de deux parties coaxiales: la tête de compression axiale **71** et l'embout annulaire **72,** appelé également "bague de rétreint". La tête de compression axiale **71** et l'embout annulaire **72** peuvent être solidaires ou mobiles l'une par rapport à l'autre.

Sur la figure 4b, on a représenté la première phase de la compression axiale de la capsule **1** sur le goulot **40** grâce à la pression axiale exercée par l'embout de compression **70** du dispositif de capsulage **7,** la tête de compression axiale **71** et l'embout annulaire **72** étant au cours de cette phase maintenus solidaires. Typiquement, au cours de cette phase, l'effort axial exercé par l'embout **70** est, pour une capsule de diamètre 30 mm, voisin de 50 daN. Le joint **3** est aplati et indenté au niveau du buvant **41,** son bord axial **31** est plaqué contre la surface interne de la tête **20** de la coque **2.**

Sur la figure 4c, on a représenté la deuxième phase de la compression axiale de la capsule **1** sur le goulot **40** grâce à la pression axiale exercée par le seul embout annulaire **72,** se traduisant par le rétreint de la partie supérieure de la jupe **21** et du bord de la tête **20** contre la partie axiale supérieure **42** du goulot **40.** Ceci a pour effet notamment de rallonger sensiblement la jupe **2,** dont l'extrémité inférieure **219** atteint alors la partie inférieure rétreinte **45** du goulot en vue du sertissage de la capsule. Typiquement, au cours de cette phase, l'effort axial exercé par l'embout annulaire **72** est, pour une capsule de diamètre 30 mm, voisin de 160 daN.

Sur la figure 4d, on a représenté la capsule **1** sertie sur le goulot **40.** La molette de filetage **73** a été utilisée pour repousser la jupe typiquement métallique dans les filets **430** de la partie filetée **43** du goulot **40,** et d'autre part, l'action subséquente de la molette de sertissage **74** qui a rabattu l'extrémité inférieure **219** de la jupe **21** sous la contre-bague **44,** de manière à sertir la capsule au goulot. La capsule comprend un jonc **27** formant une projection radiale annulaire, placé au-dessous d'une ligne d'affaiblissement **24,** de sorte que ladite ligne d'affaiblissement a été protégée lorsque la jupe **21** a été sertie au goulot **40** par formation de la partie rétreinte inférieure **28.**

### Mesure de l'étanchéité du récipient (Figure 10)

L'étanchéité d'une capsule ne s'estime pas uniquement en fonction des propriétés barrières intrinsèques des joints utilisés: le contact du joint sur le buvant du goulot joue un rôle primordial et il est impératif de définir un test représentatif des conditions d'étanchéité réelles de goulots capsulés. Pour cette raison, la demanderesse a mis a point le test d'étanchéité suivant:
a) on approvisionne une bouteille capsulée et on découpe le corps de bouteille de façon à enlever sa partie inférieure. La découpe doit être franche et aussi plane que possible de façon à pouvoir déposer le haut de la bouteille **8** muni de sa capsule **1** sur une plaque plane **500,** typiquement en inox, dans une zone où elle est perforée pour laisser passer deux conduits **501** et **502.** La liaison entre l'extrémité basse de la bouteille et la plaque **8** en inox est rendue parfaitement étanche par dépôt d'un cordon **503** épais (typiquement 20 mm) en résine époxy. Par le conduit **501,** on introduit à l'intérieur de la bouteille un gaz de pureté contrôlée, typiquement de l'argon pur ou de l'azote pur. Ce gaz est évacué par le conduit **502** qui est relié à un moyen **504** permettant de mesurer la quantité d'atomes étrangers (typiquement des atomes d'oxygène) qui se sont introduits à l'intérieur de la bouteille (machines de type Oxtran). On met l'ensemble sous une enceinte **510,** et on remplit cette dernière d'oxygène. Pour bien évaluer l'étanchéité du capsulage, il est nécessaire d'attendre plusieurs dizaines de jour, avant de commencer à mesurer la quantité d'oxygène qui s'est infiltrée à l'intérieur de la bouteille.

Des tests ont été effectués sur différentes capsules STELVIN (marque déposée de la demanderesse) 30H60 équipées de joints de diamètre 28.5mm et d'épaisseur 2mm.

En particulier :
- un joint A qui présente une structure identique à celle de la figure 6 :
   - couche résiliente en EPE400 (85 shores)
   - ensemble de couches adjacente PE / Al (12µm) / PE / Al (12µm) / PA (40µm), les couches étant reliées entre elles par une couche en matière adhésive, de type EAA.
- un joint B qui présente la structure suivante:
   - couche résiliente en EPE400 (85 shores)
   - ensemble de couches adjacentes : PE / PA SiOx (15µm) / PA (40µm), les couches étant reliées entre elles par une couche en matière adhésive, de type EAA.

Les capsules ont été serties sur des cols de bouteilles bordelaises. Elles ont été placées pendant 40 jours dans une enceinte contenant de l'oxygène.

Les analyses ont été faites avec un gaz sec (Argon) et à la température ambiante.

### Résultats : perméabilité à l'oxygène

| Joint | Test | Flux mesuré (cc O2/jour) par capsule |
|---|---|---|
| A | A.1 | 0,00024 |
| | A.2 | 0,00003 |
| | A.3 | 0,00002 |
| B | B.1 | 0,00017 |
| | B.2 | 0,00012 |
| | B.3 | 0,00010 |
| | B.4 | 0,00011 |

Le joint A présente des résultats dont certains sont très bons mais qui sont dans l'ensemble assez dispersés. On peut définir avec ce type de joints une valeur de perméabilité capsule de l'ordre de 10⁻⁴ cc O₂/jour.

Le joint B présente des résultats plus homogènes. On obtient une valeur moyenne de perméabilité capsule de l'ordre de 1,3 10⁻⁴ cc O₂/jour.

Ces valeurs, rapportées à la surface du joint, correspondent à une perméabilité de l'ordre de 1,5 cc O₂/m²/j/atmosphère. Elles sont voisines mais plus élevées que les valeurs intrinsèques de perméabilité à l'oxygène des films plastiques «barrières» contenant par exemple de l'EVOH ou du PVDC. Cela montre bien que l'étanchéité au niveau d'une capsule dépend essentiellement de la nature du contact du joint sur le buvant du goulot de la bouteille: il ne sert à rien d'utiliser un joint organique à très bonne propriété barrière si le comportement mécanique de ce dernier ne permet pas d'avoir un contact intime avec le verre du récipient.

## Revendications

1. Capsule de bouchage (1, 1'), présentant une direction axiale (10, 10'), comprenant une coque (2, 2'), avec une tête (20, 20')sensiblement perpendiculaire à ladite direction axiale et une jupe (21, 21'), et un joint (3) disposé à l'intérieur de ladite coque, ladite capsule de bouchage étant destinée à obturer de manière étanche le goulot (40) d'un récipient par compression axiale et latérale de ladite capsule et dudit joint contre ledit goulot, dans laquelle:
a) ledit joint est un joint rapporté dont la forme présente une partie centrale (30), typiquement plane et perpendiculaire à ladite direction axiale, entourée par un bord périphérique axial (31) dont la hauteur axiale h, mesurée entre le niveau de la surface interne de ladite partie centrale et l'extrémité dudit bord périphérique est au moins égale au ¼ de l'épaisseur de la dite partie centrale ;
b) ledit joint est obtenu à partir d'un disque ou d'une pastille découpée dans une bande multicouche avec un diamètre supérieur au diamètre interne de la coque au niveau de la tête puis enfoncé à force dans la capsule en ce qu' avant capsulage le rayon de courbure R du congé raccordant la partie centrale (30) du joint (3) et le bord périphérique axial (31) est compris entre 0,5 mm et 2 mm et est supérieur au rayon de courbure R' de ladite coque dans la zone de raccordement de ladite tête (20) et de ladite jupe (21);
c) ledit joint de forme est un joint multicouche constitué de :
c1) une couche résiliente (106, 209, 301, 403) en un matériau apte à subir une grande déformation en compression tout en restant dans son domaine élastique, ce matériau est choisi du groupe consistant du polystyrène expansé (EPS), polypropylène expansé (EPP) et polyéthylène expansé (EPE);
c2) un ensemble de couches adjacentes, comprenant au moins les couches suivantes, une même couche pouvant remplir plus d'une des fonctions décrites ci-dessous:
c2.1) une couche (103, 109, 203, 207, 211, 215, 304, 306, 402, 404) en un matériau ayant pour fonction de former barrière à la diffusion des gaz est un métal ou un alliage métallique tel que l'aluminium ou un alliage d'aluminium, l'acier, l'étain ou un alliage d'étain, un matériau organique tel que le polychlorure de vinylidène (PVDC), un copolymère éthylène - alcool vinylique (EVOH) ou encore un matériau minéral tel qu'un oxyde de silicium (SiOx);
c2.2) une couche support malléable (101, 105, 107, 111, 203, 207, 211, 215, 304, 401, 405) ayant pour fonction de conférer audit ensemble de couches adjacentes un comportement mécanique global malléable permettant, en association avec ladite couche résiliente, audit joint de forme de subir la déformation imposée par sa mise en forme sans qu'il y ait formation de plis, ladite couche support malléable est en un matériau tel qu'un métal ou alliage métallique, typiquement de l'aluminium ou un alliage d'aluminium, de l'acier, de l'étain ou un alliage d'étain, ou un matériau thermoplastique tel qu'une polyoléfine (PE ou PP), un polyéthylène téréphtalate (PET), ou un polyamide (PA);
c2.3) une couche extérieure (101 ou 111, 201 ou 217, 306, 401, ou 405) en matière plastique ayant pour fonction de présenter une surface extérieure destinée à être indentée sous l'effet de ladite compression axiale de ladite capsule et dudit joint contre ledit goulot, de sorte qu'elle épouse, au niveau du contact, la forme de la surface du buvant dudit goulot, ladite couche extérieure est une polyoléfine, de préférence un polyéthylène (PE), éventuellement chargé en agent glissant, un polychlorure de vinylidène (PVDC), un polyéthylène téréphtalate (PET) ou de préférence, un polyamide (PA).

2. Capsule de bouchage selon la revendication 1 dans laquelle le matériau de ladite couche extérieure forme avec le matériau du récipient un contact avec un coefficient de frottement faible, typiquement un coefficient de Coulomb inférieur à 0,25, de préférence inférieur à 0,2.

3. Capsule de bouchage selon la revendication 1 ou 2 dans laquelle ladite hauteur h est comprise entre 25% et 100% de l'épaisseur de ladite partie centrale.

4. Capsule de bouchage selon l'une quelconque des revendications 1 à 3 **caractérisée en ce que** ladite jupe comprend également, dans sa partie la plus proche de ladite tête, une projection radiale intérieure (22, 22'), formant une butée pour ledit bord axial dudit joint.

5. Capsule de bouchage selon la revendication 4 dans laquelle ladite projection radiale intérieure est disposée à une distance axiale de ladite tête qui a été choisie en fonction notamment de ladite hauteur axiale h, de manière à ce que ledit joint reste sous contrainte après mise en place à l'intérieur de ladite coque.

6. Capsule de bouchage selon l'une quelconque des revendications 1 à 5 dans laquelle ledit joint de forme présente une épaisseur allant de 1 mm à 3 mm, et de préférence de 1,2 mm à 2,5 mm.

7. Capsule de bouchage selon l'une quelconque des revendications 1 à 5 dans laquelle ladite couche résiliente est en un matériau polymérique expansé, un polystyrène expansé (EPS), un polypropylène expansé (EPP) ou un polyéthylène expansé (EPE) ou encore un matériau élastomérique, typiquement un polymère comportant des groupements butyles ou nitriles, ou un élastomère thermoplastique tel que SIS (styrène isoprène styrène), SBS (styrène butadiène styrène) ou SEBS (styrène éthylène butylène styrène).

8. Capsule de bouchage selon l'une quelconque des revendications 1 à 7 dans laquelle ledit ensemble de couches adjacentes est constitué par une couche (ou un ensemble de couches) revêtue sur une de ses faces par un revêtement de faible épaisseur, tel qu'un revêtement déposé par PVD, CVD ou assistance plasma.

9. Capsule de bouchage selon l'une quelconque des revendications 1 à 8 dans laquelle ledit joint de forme présente une structure symétrique, c'est-à-dire où deux ensembles de couches adjacentes identiques sont disposés de façon symétrique de part et d'autre de ladite couche résiliente.

10. Capsule de bouchage selon l'une quelconque des revendications 1 à 9 dans laquelle ledit joint de forme est exempt de couche en matériau cellulosique ou en papier de type "papier kraft".

11. Capsule de bouchage selon l'une quelconque des revendications 1 à 10 dans laquelle ledit joint comprend une âme constituée de ladite couche résiliente, d'épaisseur typiquement comprise entre 1 et 3 mm, et, adjacent à au moins une face de ladite âme, un ensemble de couches adjacentes qui est un ensemble complexe métalloplastique du type P/Adh/M/Adh/P' ou encore du type M/Adh/P/Adh/M'/Adh/P', où P et P' symbolisent des matériaux plastiques, éventuellement différents, M et M' symbolisent des métaux, éventuellement différents, et Adh désigne une couche adhésive appropriée à l'assemblage de couches métalliques et de couches polymériques.

12. Capsule de bouchage selon l'une quelconque des revendications 1 à 11 dans laquelle ledit joint comprend une âme constituée de ladite couche résiliente, d'épaisseur typiquement comprise entre 1 et 3 mm, et, adjacent à au moins une face de ladite âme, un ensemble de couches adjacentes entièrement en matières plastiques, tel qu'un film polyéthylène (PE)/ copolymère (éthylène - alcool vinylique) (EVOH) / polyéthylène (PE), la couche en polyéthylène orientée à l'opposé de l'âme étant de préférence chargée avec un agent glissant.

13. Capsule de bouchage selon l'une quelconque des revendications 1 à 12, modifiée en ce que ladite capsule comprend une coque extérieure métallique (2") et un insert (5) intérieur en matière plastique, ledit insert étant solidaire de ladite coque métallique, son fond étant plaqué contre la tête la coque, de sorte que ledit joint de forme est solidarisé sous contrainte non plus à ladite tête mais audit fond dudit insert.

14. Procédé de fabrication d'une capsule de bouchage (1, 1') présentant une direction axiale (10, 10'), comprenant une coque (2, 2'), avec une tête (20, 20') sensiblement perpendiculaire à ladite direction axiale et un jupe (21, 21'), et un joint (3) disposé à l'intérieur de ladite coque, ladite capsule de bouchage étant destinée à obturer de manière étanche un goulot (40) d'un récipient par compression axiale et latérale de ladite capsule et dudit joint (3) contre ledit goulot (40), ledit joint est un joint rapporté dont le forme présente une partie centrale (30), typiquement plane et perpendiculaire à ladite direction axiale, entourée par un bord périphérique axial (31) dont la hauteur axiale h, mesurée entre le niveau de la surface interne de ladite partie centrale et l'extrémité dudit bord périphérique est au moins égale au ¼ de l'épaisseur de la dite partie centrale, dans lequel:
a) on approvisionne ou on forme une coque (2) qui comprend une tête (20) et une jupe (21) et présente un diamètre intérieur D en haut de coque au niveau de ladite tête,
b) on approvisionne ou on forme une pastille (3') en matériau multicouche de diamètre D'>D, le multicouche comprenant au moins :
b1) une couche résiliente (106, 209, 301, 403) en un matériau apte à subir une grande déformation en compression tout en restant dans son domaine élastique, ce matériau est choisi du group consistant du polystyrène expansé (EPS), polypropylène expansé (EPP) et polyéthylène expansé (EPE), ou un matériau élastomérique;
b2) un ensemble de couches adjacentes, comprenant au moins les couches suivantes, une même couche pouvant remplir plus d'une des fonctions décrites ci-dessous:
b2.1) une couche (103, 109, 203, 207, 211, 215, 304, 306, 402, 404) en un matériau ayant pour fonction de former barrière à la diffusion des gaz;
b2.2) une couche support malléable (101, 105,107, 111, 203, 207, 211, 215, 304, 401, 405) ayant pour fonction de conférer audit ensemble de couches adjacentes un comportement mécanique global malléable permettant, en association avec ladite couche résiliente, à ladite pastille de subir la déformation imposée par sa mise en forme sans qu'il y ait création de plis;
b2.3) une couche extérieure (101 ou 111, 201 ou 217, 306, 401, ou 405) en matière plastique ayant pour fonction de présenter une surface extérieure destinée à être indentée sous l'effet de ladite compression axiale dudit joint contre ledit goulot exercée lors du capsulage, de sorte qu'elle épouse, au niveau du contact, la forme de la surface du buvant dudit goulot;
c) ladite pastille étant formée par découpage, typiquement à l'emporte-pièce, d'une bande multicouche, l'écart entre le diamètre D' de la pastille et le diamètre intérieur D de la coque étant typiquement compris entre la moitié et le double de l'épaisseur de ladite pastille ;
d) on assemble ladite pastille à ladite coque en introduisant à force ladite pastille dans ladite coque par son ouverture, à l'aide d'un dispositif d'assemblage (60, 61) comprenant une matrice de contrainte (60) placée sur ladite ouverture de ladite coque contre son extrémité inférieure (219), et un poinçon (61) de mise en forme de ladite pastille, qui par déplacement axial relatif du poinçon par rapport à la matrice, déforme ladite pastille par passage dans la matrice pour former ledit joint de forme doté dudit bord axial et place ledit joint au fond de ladite coque.

15. Procédé selon la revendications 14 dans lequel ladite pastille (3') est transformée en joint de forme (3) puis placée sous contrainte au fond de ladite coque en un seul mouvement axial du poinçon, la matrice et la coque étant maintenues fixes.

16. Procédé selon la revendications 14 dans lequel ladite jupe comprend, dans sa partie la plus proche de ladite tête, une projection radiale intérieure (22), qui forme une butée pour le bord axial (31) dudit joint et dans lequel ledit joint est placé en force au-delà de ladite projection radiale intérieure, entre ladite tête et ladite projection radiale intérieure, l'extrémité du bord axial venant en butée contre ladite projection radiale intérieure, la distance entre la paroi interne de ladite tête et ladite projection radiale intérieure étant définie de telle sorte que ledit joint peut être maintenu sous contrainte.

17. Procédé selon l'une quelconque des revendications 14 à 16, modifié en ce que on approvisionne également un insert formant une pièce moulée en matière plastique comprenant une tête et une jupe, on assemble ladite pastille audit insert au lieu de l'assembler à ladite coque, de manière à obtenir ledit joint typiquement sous contrainte assemblé audit insert.

18. Utilisation de capsules de bouchage selon l'une quelconque des revendications 1 à 13 ou obtenues par le procédé selon l'une quelconque des revendications 14 à 17, pour l'obturation de bouteilles devant contenir un liquide sous pression.

## Patentansprüche

1. Verschlusskapsel (1, 1'), die eine Axialrichtung (10, 10') aufweist, umfassend eine Schale (2, 2') mit einem Kopf (20, 20') im Wesentlichen senkrecht auf die Axialrichtung und eine Schürze (21, 21') und eine Dichtung (3), die im Inneren der Schale angeordnet ist, wobei die Verschlusskapsel dazu bestimmt ist, den Hals (40) eines Behälters durch axiale und seitliche Kompression der Kapsel und der Dichtung gegen den Hals dicht zu verschließen, bei der:
a) die Dichtung eine aufgesetzte Dichtung ist, deren Form einen zentralen Teil (30) aufweist, der typischerweise flach und auf die Axialrichtung senkrecht ist, umgeben von einem axialen Umfangsrand (31), dessen axiale Höhe h, gemessen zwischen dem Niveau der Innenfläche des zentralen Teils und dem Ende des Umfangsrandes, mindestens gleich einem Viertel der Dicke des zentralen Teils ist;
b) die Dichtung aus einer Scheibe oder Plakette erhalten wird, die aus einem mehrschichtigen Band mit einem größeren Durchmesser als der Innendurchmesser der Schale im Bereich des Kopfes ausgeschnitten ist, und dann fest in die Kapsel gedrückt wird, so dass vor dem Verkapseln der Krümmungsradius R des Freiraums, der den zentralen Teil (30) der Dichtung (3) und dem axialen Umfangsrand (31) verbindet, zwischen 0,5 mm und 2 mm beträgt und größer als der Krümmungsradius R' der Schale in der Verbindungszone des Kopfes (20) und der Schürze (21) ist;
c) die Formdichtung eine mehrschichtige Dichtung ist, bestehend aus:
c1) einer elastischen Schicht (106, 209, 301, 403) aus einem Material, das einer starken Kompressionsverformung standhalten kann, wobei es in seinem elastischen Bereich bleibt, wobei dieses Material in der Gruppe ausgewählt wird, die aus expandiertem Polystyrol (EPS), expandiertem Polypropylen (EPP) und expandiertem Polyethylen (EPE) besteht;
c2) einer Gesamtheit von aneinandergrenzenden Schichten, umfassend mindestens die folgenden Schichten, wobei eine selbe Schicht mehr als eine der unten beschriebenen Funktionen erfüllen kann:
c2.1) eine Schicht (103, 109, 203, 207, 211, 215, 304, 306, 402, 404) aus einem Material, das die Funktion hat, eine Barriere für die Diffusion der Gase zu bilden, ist ein Metall oder eine Metalllegierung, wie Aluminium oder eine Aluminiumlegierung, Stahl, Zinn oder eine Zinnlegierung, ein organisches Material, wie Polyvinylidenchlorid (PVDC), ein Ethylen-Copolymer - Vinylalkohol (EVOH) oder auch ein mineralisches Material, wie ein Siliziumoxid (SiOx);
c2.2) eine verformbare Trägerschicht (101, 105, 107, 111, 203, 207, 211, 215, 304, 401, 405), die die Funktion hat, der Gesamtheit von aneinandergrenzenden Schichten ein verformbares globales mechanisches Verhalten zu verleihen, das es in Verbindung mit der elastischen Schicht der Formdichtung ermöglicht, der Verformung standzuhalten, die ihr durch ihre Formung auferlegt wird, ohne dass es zu einer Faltenbildung kommt, wobei die verformbare Trägerschicht aus einem Material, wie einem Metall oder einer Metalllegierung, typischerweise Aluminium oder einer Aluminiumlegierung, Stahl, Zinn oder einer Zinnlegierung, oder einem thermoplastischen Material, wie einem Polyolefin (PE oder PP), einem Polyethylenterephthalat (PET) oder einem Polyamid (PA) ist;
c2.3) eine äußere Schicht (101 oder 111, 201 oder 217, 306, 401 oder 405) aus Kunststoff, die die Funktion hat, eine Außenfläche darzustellen, die dazu bestimmt ist, unter der Wirkung der axialen Kompression der Kapsel und der Dichtung gegen den Hals eingerückt zu werden, so dass sie sich im Bereich des Kontakts an die Form der Oberfläche der Öffnung des Flaschenhalses anlegt, wobei die Außenschicht ein Polyolefin, vorzugsweise ein Polyethylen (PE), eventuell beaufschlagt mit einem Gleitmittel, ein Polyvinylidenchlorid (PVDC), ein Polyethylenterephthalat (PET) oder vorzugsweise ein Polyamid (PA) ist.

2. Verschlusskapsel nach Anspruch 1, bei der das Material der Außenschicht mit dem Material des Behälters einen Kontakt mit einem geringen Reibbeiwert bildet, typischerweise einem Reibbeiwert Coulomb unter 0,25, vorzugsweise unter 0,2.

3. Verschlusskapsel nach Anspruch 1 oder 2, bei der die Höhe h zwischen 25 % und 100 % der Dicke des zentralen Teils beträgt.

4. Verschlusskapsel nach einem der Ansprüche 1 bis 3, **dadurch gekennzeichnet, dass** die Schürze in ihrem dem Kopf am nächsten liegenden Teil eine auch eine radial innere Projektion (22, 22') umfasst, die einen Anschlag für den Axialrand der Dichtung bildet.

5. Verschlusskapsel nach Anspruch 4, bei der die radial innere Projektion in einem Axialabstand zum Kopf angeordnet ist, der insbesondere in Abhängigkeit von der axialen Höhe h gewählt wurde, so dass sie Dichtung nach Anbringen im Inneren der Schale unter Spannung bleibt.

6. Verschlusskapsel nach einem der Ansprüche 1 bis 5, bei der die Formdichtung eine Dicke von 1 mm bis 3 mm und vorzugsweise von 1,2 mm bis 2,5 mm aufweist.

7. Verschlusskapsel nach einem der Ansprüche 1 bis 5, bei der die elastische Schicht aus einem expandierten Polymermaterial, einem expandierten Polystyrol (EPS), einem expandierten Polypropylen (EPP) oder einem expandierten Polyethylen (EPE) oder auch einem Elastomermaterial ist, typischerweise einem Polymer, umfassend Butyl- oder Nitrilgruppierungen, oder einem thermoplastischen Elastomer, wie SIS (Styrolisoprenstyrol), SBS (Styrolbutadienstyrol) oder SEBS (Styrolethylenbutylenstyrol).

8. Verschlusskapsel nach einem der Ansprüche 1 bis 7, bei der die Gesamtheit von aneinandergrenzenden Schichten von einer Schicht (oder einer Gesamtheit von Schichten) gebildet ist, die auf einer ihrer Seiten mit einem Überzug von geringer Dicke überzogen ist, wie beispielsweise einem Überzug, der durch PVD, CVD oder Plasmaunterstützung aufgebracht wurde.

9. Verschlusskapsel nach einem der Ansprüche 1 bis 8, bei der die Formdichtung eine symmetrische Struktur aufweist, d.h. bei der zwei identische Einheiten von aneinandergrenzenden Schichten symmetrisch beiderseits der elastischen Schicht angeordnet sind.

10. Verschlusskapsel nach einem der Ansprüche 1 bis 9, bei der die Formdichtung keine Schicht aus einem Zellulosematerial oder aus Papier des Typs "Kraftpapier" aufweist.

11. Verschlusskapsel nach einem der Ansprüche 1 bis 10, bei der die Dichtung einen Kern umfasst, der von der elastischen Schicht mit einer Dicke zwischen typischerweise 1 und 3 mm und angrenzend an mindestens eine Seite des Kerns einer Gesamtheit von aneinandergrenzenden Schichten gebildet ist, die eine komplexe metalloplastische Einheit des Typs P/Adh/M/Adh/P' oder auch des Typs M/Adh/P/Adh/M'/Adh/P' ist, wobei P und P' eventuell unterschiedliche Kunststoffe symbolisieren, M und M' eventuell unterschiedliche Metalle symbolisieren und Adh eine Klebeschicht bezeichnet, die für die Zusammenfügung von metallischen Schichten und Polymerschichten geeignet ist.

12. Verschlusskapsel nach einem der Ansprüche 1 bis 11, bei der die Dichtung einen Kern umfasst, der von der elastischen Schicht mit einer Dicke zwischen typischerweise 1 und 3 mm und angrenzend an mindestens eine Seite des Kerns einer Gesamtheit von aneinandergrenzenden Schichten zur Gänze aus Kunststoff gebildet ist, wie einer Polyethylenfolie (PE)/Copolymer (EthylenVinylalkohol) (EVOH)/Polyethylen (PE), wobei die gegenüber dem Kern ausgerichtete Polyethylenschicht vorzugsweise mit einem Gleitmittel beaufschlagt ist.

13. Verschlusskapsel nach einem der Ansprüche 1 bis 12, derart abgeändert, dass die Kapsel eine äußere metallische Schale (2") und einen inneren Kunststoffeinsatz (5) umfasst, wobei der Einsatz mit der metallischen Schale verbunden ist, wobei sein Boden gegen den Kopf der Schale gedrückt wird, so dass die Formdichtung unter Spannung nicht mehr mit dem Kopf sondern mit dem Boden des Einsatzes verbunden ist.

14. Verfahren zur Herstellung einer Verschlusskapsel (1, 1'), die eine Axialrichtung (10, 10') aufweist, umfassend eine Schale (2, 2') mit einem Kopf (20, 20') im Wesentlichen senkrecht auf die Axialrichtung und eine Schürze (21, 21') und eine Dichtung (3), die im Inneren der Schale angeordnet ist, wobei die Verschlusskapsel dazu bestimmt ist, den Hals (40) eines Behälters durch axiale und seitliche Kompression der Kapsel und der Dichtung (3) gegen den Hals (40) dicht zu verschließen, wobei die Dichtung eine aufgesetzte Dichtung ist, deren Form einen zentralen Teil (30) aufweist, der typischerweise flach und auf die Axialrichtung senkrecht ist, umgeben von einem axialen Umfangsrand (31), dessen axiale Höhe h, gemessen zwischen dem Niveau der Innenfläche des zentralen Teils und dem Ende des Umfangsrandes, mindestens gleich einem Viertel ¼ der Dicke des zentralen Teils ist, bei dem:
a) eine Schale (2), die einen Kopf (20) und eine Schürze (21) aufweist und einen Innendurchmesser D oben in der Schale im Bereich des Kopfes aufweist, verwendet oder gebildet wird,
b) eine Plakette (3') aus einem mehrschichtigen Material mit einem Durchmesser D'>D verwendet oder gebildet wird, wobei die mehrschichtige Plakette mindestens umfasst:
b1) eine elastische Schicht (106, 209, 301, 403) aus einem Material, das geeignet ist, einer starken Kompressionsverformung standzuhalten, wobei es in seinem elastischen Bereich bleibt, wobei dieses Material in der Gruppe ausgewählt wird, die aus expandiertem Polystyrol (EPS), expandiertem Polypropylen (EPP) und expandiertem Polyethylen (EPE) oder einem Elastomermaterial besteht;
b2) eine Gesamtheit von aneinandergrenzenden Schichten, umfassend mindestens eine der folgenden Schichten, wobei eine selbe Schicht mehr als eine der unten beschriebenen Funktionen erfüllen kann:
b2.1) eine Schicht (103, 109, 203, 207, 211, 215, 304, 306, 402, 404) aus einem Material, das die Funktion hat, eine Barriere für die Diffusion der Gase zu bilden;
b2.2) eine verformbare Trägerschicht (101, 105, 107, 111, 203, 207, 211, 215, 304, 401, 405), die die Funktion hat, der Gesamtheit von aneinandergrenzenden Schichten ein verformbares globales mechanisches Verhalten zu verleihen, das es in Verbindung mit der elastischen Schicht der Plakette ermöglicht, der Verformung standzuhalten, die ihr durch ihre Formung auferlegt wird, ohne dass es zu einer Faltenbildung kommt;
b2.3) eine äußere Schicht (101 oder 111, 201 oder 217, 306, 401 oder 405) aus Kunststoff, die die Funktion hat, eine Außenfläche darzustellen, die dazu bestimmt ist, unter der Wirkung der axialen Kompression der Kapsel gegen den Hals, der bei der Verkapselung ausgeübt wird, eingerückt zu werden, so dass sie sich im Bereich des Kontakts an die Form der Oberfläche des Öffnung des Flaschenhalses anlegt;
c) wobei die Plakette durch Ausschneiden, typischerweise durch Stanzschnitt, aus einem mehrschichtigen Band gebildet wird, wobei der Abstand zwischen dem Durchmesser D' der Plakette und dem Innendurchmesser D der Schale typischerweise zwischen der Hälfte und dem Doppelten der Dicke der Plakette liegt;
d) die Plakette mit der Schale verbunden wird, wobei die Plakette fest in die Schale durch ihre Öffnung eingeführt wird, mit Hilfe einer Montageeinrichtung (60, 61), umfassend eine Spannmatrix (60), die auf der Öffnung der Schale gegen ihr unteres Ende (219) angeordnet wird, und einen Stempel (61) zum Formen der Plakette, der durch relative Axialverschiebung des Stempels in Bezug zur Matrix die Plakette durch Durchführen durch die Matrix verformt, um die Formdichtung zu bilden, die mit dem Axialrand versehen ist, und die Dichtung am Boden der Schale anordnet.

15. Verfahren nach Anspruch 14, bei dem die Plakette (3') in eine Formdichtung (3) umgeformt und dann unter Spannung am Boden der Schale in einer einzigen Axialbewegung des Stempels angeordnet wird, wobei die Matrix und die Schale fest gehalten werden.

16. Verfahren nach Anspruch 14, bei dem die Schürze in ihrem dem Kopf am nächsten liegenden Teil eine radial innere Projektion (22) umfasst, die einen Anschlag für den axialen Rand (31) der Dichtung bildet, und in dem die Dichtung fest über die radial innere Projektion hinaus zwischen dem Kopf und der radial inneren Projektion angeordnet wird, wobei das Ende des axialen Randes an der radial inneren Projektion zum Anschlag gelangt, wobei der Abstand zwischen der Innenwand des Kopfes und der radial inneren Projektion derart definiert ist, dass die Dichtung unter Spannung gehalten werden kann.

17. Verfahren nach einem der Ansprüche 14 bis 16, derart abgeändert, dass auch ein Einsatz, der einen Kunststoffgussteil bildet, umfassend einen Kopf und eine Schürze, verwendet wird, die Plakette mit dem Einsatz verbunden wird, anstatt mit der Schale verbunden zu werden, um die Dichtung typischerweise unter Spannung, die mit dem Einsatz verbunden ist, zu erhalten.

18. Verwendung von Verschlusskapseln nach einem der Ansprüche 1 bis 13 oder hergestellt durch das Verfahren nach einem der Ansprüche 14 bis 17, für den Verschluss von Flaschen, die eine Flüssigkeit unter Druck enthalten sollen.

## Claims

1. Stopper cap (1, 1'), having an axial direction (10, 10'), comprising a shell (2, 2'), with a head (20, 20') substantially perpendicular to said axial direction and a skirt (21, 21'), and a seal (3) arranged inside said shell, said stopper cap being intended to tightly seal the neck (40) of a receptacle by axial and lateral compression of said cap and of said seal against said neck, wherein:
a) said seal is an add-on seal having a central portion (30), typically planar and perpendicular to said axial direction, surrounded by an axial peripheral edge (31), the axial height h of which, measured between the inner surface of said central portion and the end of said peripheral edge is at least equal to ¼ the thickness of said central portion;
b) said seal is obtained from a disc or from a tablet cut into a multilayer strip having a diameter greater than the internal diameter of the shell in the region of the head then pushed by force into the cap, in that, before encapsulation, the radius of curvature R of the fillet connecting the central portion (30) of the seal (3) and the axial peripheral edge (31) is between 0.5 mm and 2 mm and is greater than the radius of curvature R' of said shell in the connection zone of said head (20) and said skirt (21);
c) said form seal is a multilayer seal formed by:
c1) a resilient layer (106, 209, 301, 403) made of a material capable of sustaining extensive deformation under compression while remaining within its resilient range, said material being chosen from the group consisting of expanded polystyrene (EPS), expanded polypropylene (EPP) and expanded polyethylene (EPE);
c2) a set of adjacent layers, comprising at least the following layers, with the same layer capable of fulfilling more than one of the functions described below:
c2.1) a layer (103, 109, 203, 207, 211, 215, 304, 306, 402, 404) made of a material of which the function is to form a barrier to the diffusion of gases, said material being a metal or a metal alloy such as aluminium or an aluminium alloy, steel, tin or a tin alloy, an organic material such as polyvinylidene chloride (PVDC), an ethylene vinyl alcohol copolymer (EVOH) or alternatively a mineral material such as silicon oxide (SiOx);
c2.2) a malleable support layer (101, 105, 107, 111, 203, 207, 211, 215, 304, 401, 405) of which the function is to provide said set of adjacent layers with an overall malleable mechanical behaviour that allows said form seal, in association with said resilient layer, to be subjected to the deformation required to shape it without the formation of folds, said malleable support layer being made of a material such as a metal or metal alloy, typically aluminium, or an aluminium alloy, steel, tin or a tin alloy, or a thermoplastic material such as a polyolefin (PE or PP), a polyethylene terephthalate (PET) or a polyamide (PA);
c2.3) an outer layer (101 or 111, 201 or 217, 306, 401, or 405) made of a plastics material of which the function is to present an outer surface intended for indentation under the effect of said axial compression of said cap and of said seal against said neck so as to match, at the contact, the shape of the surface of the mouth of said neck, said outer layer being a polyolefin, preferably a polyethylene (PE), optionally loaded with a slip agent, a polyvinylidene chloride (PVDC), a polyethylene terephthalate (PET) or preferably a polyamide (PA).

2. Stopper cap according to claim 1, wherein the material of said outer layer forms, with the material of the receptacle, a contact with a low friction coefficient, typically a Coulomb coefficient of less than 0.25, preferably less than 0.2.

3. Stopper cap according to either claim 1 or claim 2, wherein said height h is between 25 % and 100 % of the thickness of said central portion.

4. Stopper cap according to any one of claims 1 to 3, **characterised in that** said skirt also has, in its portion closest to said head, an inner radial projection (22, 22') forming a stop for said axial edge of said seal.

5. Stopper cap according to claim 4, wherein said inner radial projection is arranged at an axial distance from said head that was chosen in particular based on said axial height h, such that said seal remains under stress after being placed inside said shell.

6. Stopper cap according to any one of claims 1 to 5, wherein said form seal has a thickness ranging from 1 mm to 3 mm, and preferably from 1.2 mm to 2.5 mm.

7. Stopper cap according to any one of claims 1 to 5, wherein said resilient layer is made of an expanded polymer material, expanded polystyrene (EPS), expanded polypropylene (EPP) or expanded polyethylene (EPE) or alternatively an elastomer material, typically a polymer comprising butyl or nitrile groups, or a thermoplastic elastomer such as SIS (styrene isoprene styrene), SBS (styrene butadiene styrene) or SEBS (styrene ethylene/butylene styrene).

8. Stopper cap according to any one of claims 1 to 7, wherein said set of adjacent layers is formed by a layer (or a set of layers) covered on one of its faces by a thin covering, such as a coating applied by PVD, CVD or plasma assistance.

9. Stopper cap according to any one of claims 1 to 8, wherein said form seal has a symmetrical structure, i.e. where two sets of identical adjacent layers are arranged in a symmetrical manner on either side of said resilient layer.

10. Stopper cap according to any one of claims 1 to 9, wherein said form seal is free of a layer of cellulose material or "Kraft" type paper.

11. Stopper cap according to any one of claims 1 to 10, wherein said seal has a core formed of said resilient layer, of a thickness typically between 1 and 3 mm, and, adjacent to at least one face of said core, a set of adjacent layers which is a complex metalloplastic set of the P/Adh/M/Adh/P' type or alternatively of the M/Adh/P/Adh/M'/Adh/P' type, where P and P' symbolise plastics materials, which may be different, M and M' symbolise metals, which may be different, and Adh designates an adhesive layer suitable for assembling the metal layers and polymer layers.

12. Stopper cap according to any one of claims 1 to 11, wherein said seal has a core formed of said resilient layer, of a thickness typically between 1 and 3 mm, and, adjacent to at least one face of said core, a set of adjacent layers made entirely of plastics materials, such as a film of polyethylene (PE)/copolymer (ethylene vinyl alcohol) (EVOH)/polyethylene (PE), the polyethylene layer oriented opposite the core being preferably loaded with a slip agent.

13. Stopper cap according to any one of claims 1 to 12, modified in that said cap has a metal outer shell (2") and an inner insert (5) made of a plastics material, said insert being rigidly connected to said metal shell, its bottom being pressed against the head of the shell, in such a way that said form seal is no longer rigidly connected under stress to said head but to the bottom of said insert.

14. Method for manufacturing a stopper cap (1, 1') that has an axial direction (10, 10'), comprising a shell (2, 2'), with a head (20, 20') that is substantially perpendicular to said axial direction and a skirt (21, 21'), and a seal (3) arranged inside said shell, said stopper cap being intended to close and seal a neck (40) of a receptacle by axial and lateral compression of said cap and of said seal (3) against said neck (40), said seal being an add-on seal having a central portion (30), typically planar and perpendicular to said axial direction, surrounded by an axial peripheral edge (31) of which the axial height h, measured between the inner surface of said central portion and the end of said peripheral edge is at least equal to ¼ of the thickness of said central portion, wherein:
a) a shell (2) is provided or formed which comprises a head (20) and a skirt (21) and has an internal diameter D at the top of the shell in the region of said head,
b) a tablet (3') is provided or formed made of a multilayer material of diameter D' > D, the multilayer comprising at least:
b1) a resilient layer (106, 209, 301, 403) made of a material capable of sustaining extensive deformation in compression while remaining within its resilient range, this material being chosen from the group consisting of expanded polystyrene (EPS), expanded polypropylene (EPP) and expanded polyethylene (EPE), or an elastomer material;
b2) a set of adjacent layers, comprising at least the following layers, the same layer being capable of fulfilling more than one of the functions described below:
b2.1) a layer (103, 109, 203, 207, 211, 215, 304, 306, 402, 404) made of a material of which the function is to form a barrier to the diffusion of gases;
b2.2) a malleable support layer (101, 105, 107, 111, 203, 207, 211, 215, 304, 401, 405) of which the function is to provide said set of adjacent layers with an overall malleable mechanical behaviour that allows said tablet, in association with said resilient layer, to be subjected to deformation imposed by the shaping thereof without the formation of folds;
b2.3) an outer layer (101 or 111, 201 or 217, 306, 401 or 405) made of a plastics material of which the function is to present an outer surface intended to be indented under the effect of said axial compression of said seal against said neck applied during stoppering, so that it matches the shape of the surface of the mouth of said neck in the region of the contact;
c) said tablet being formed by cutting, typically with a cutting punch, a multilayer strip, the difference between the diameter D' of the tablet and the internal diameter D of the shell typically being between half and double the thickness of said tablet;
d) said tablet is assembled to said shell by introducing said tablet by force into said shell through its opening, using an assembly device (60, 61) comprising a stress die (60) placed on said opening of said shell against its lower end (219), and a shaping punch (61) of said tablet, which by relative axial displacement of the punch in relation to the die, deforms said tablet by passing into the die to form said form seal equipped with said axial edge and places said seal in the bottom of said shell.

15. Method according to claim 14, wherein said tablet (3') is transformed into a form seal (3) then placed under stress in the bottom of said shell in a single axial movement of the punch, the die and the shell being kept stationary.

16. Method according to claim 14, wherein said skirt has, in its part closest to said head, an inner radial projection (22), which forms a stop for the axial edge (31) of said seal and in which said seal is placed by force beyond said inner radial projection, between said head and said inner radial projection, the end of the axial edge abutting said inner radial projection, the distance between the inner wall of said head and said inner radial projection being defined such that said seal can be maintained under stress.

17. Method according to any one of claims 14 to 16, modified in that an insert forming a moulded part made of a plastics material comprising a head and a skirt is also provided, said tablet is assembled to said insert instead of assembling it to said shell, so as to obtain said seal typically under stress assembled to said insert.

18. Use of stopper caps according to any one of claims 1 to 13 or obtained by the method according to any one of claims 14 to 17, to close bottles that are to contain a liquid under pressure.
